# EUROPEAN PATENT APPLICATION

(11) **EP 1 662 496 A2**
(43) Date of publication of application: **31.05.2006**
(21) Application number: 05110978.3
(22) Date of filing: 18.11.2005
(51) Int. Cl.: G11B 7/007

(54) **Information storage medium, stamper disc apparatus and management information playback method**

(30) Priority: 30.11.2004 JP 2004346566
(71) Applicant: KABUSHIKI KAISHA TOSHIBA, Tokyo 105-8001 (JP)
(72) Inventor: Ootera, Yasuaki Toshiba Corp. Intell. Prop. Div., 105-8001, Tokyo (JP); Ogawa, Akihito Toshiba Corp. Intell. Prop. Div., 105-8001, Tokyo (JP); Nakamura, Naomasa Toshiba Corp. Intell. Prop. Div., 105-8001, Tokyo (JP); Morita, Seiji Toshiba Corp. Intell. Prop. Div., 105-8001, Tokyo (JP); Morishita, Naoki Toshiba Corp. Intell. Prop. Div., 105-8001, Tokyo (JP); Takazawa, Koji Toshiba Corp. Intell. Prop. Div., 105-8001, Tokyo (JP)
(74) Representative: Henkel, Feiler & Hänzel

(57) **Abstract**

According to this invention, a disc-like information storage medium has a concentric management information area (11) and a concentric data area (21). The management information area includes a plurality of grooves (13) aligned in a radial direction, a dye material applied to the plurality of grooves, and a plurality of bar-like patterns (12) formed in a radial direction crossing the plurality of grooves and aligned in a circumferential direction. The data area includes a plurality of grooves (23) aligned in the radial direction, and a dye material applied to the plurality of grooves. The plurality of bar-like patterns aligned in the circumferential direction include management information.

## Description

The present invention relates to a disc-like information storage medium such as a DVD-R. The present invention also relates to a stamper for forming a disc-like information storage medium by press-molding. The present invention also relates to a disc apparatus and management information playback method for playing back management information from bar-like patterns aligned in a concentric management information area.

An optical disc such as a DVD has a region called a burst cutting area (BCA) in which a barcode pattern is recorded. This barcode pattern is recorded by burning off a reflecting film of the disc by a laser, or by changing the phase of a phase-changing recording film of the disc. For example, Jpn. Pat. Appln. KOKAI Publication No. 2004-152429 proposes a technique of recording a barcode pattern on a disc by synchronizing a modulation signal corresponding to the barcode pattern with a signal from a disc rotating motor.

In order to process a next-generation optical disc whose recording density is higher than that of a current-generation optical disc, a laser beam having a wavelength shorter than that of a laser used to process the current-generation optical disc is used.

The recording characteristics of a WORM optical disc using a dye material depend on the wavelength of a laser. Therefore, the next-generation optical disc corresponding to a short wavelength has the problem that a barcode pattern cannot be appropriately recorded by a long-wavelength laser corresponding to processing of the current-generation optical disc.

It is an object of the present invention to provide an information storage medium having a barcode pattern (management information) appropriately recorded by a long-wavelength laser. It is another object of the present invention to provide a stamper capable of press-molding an information storage medium which can record a barcode pattern (management information) using a long-wavelength laser. It is still another object of the present invention to provide a disc apparatus and management information playback method capable of accurately playing back a barcode pattern (management information).

According to an aspect of the present invention, there is provided an information storage medium comprising a concentric management information area, and a concentric data area, wherein the management information area includes a plurality of grooves aligned in a radial direction, a dye material applied to the plurality of grooves, and a plurality of bar-like patterns formed in a radial direction crossing the plurality of grooves and aligned in a circumferential direction; the data area includes a plurality of grooves aligned in the radial direction, and a dye material applied to the plurality of grooves; and the plurality of bar-like patterns aligned in the circumferential direction includes management information.

According to another aspect of the present invention, there is provided a stamper for forming an information storage medium by press-molding, comprising a first stamp area in which a concentric management information area is formed by press-molding, and a second stamp area in which a concentric data area is formed by press-molding, wherein the first stamp area has a plurality of grooves aligned in a radial direction, and the second stamp area has a plurality of grooves aligned in the radial direction.

According to still another aspect of the present invention, there is provided a disc apparatus comprising an irradiation unit configured to irradiate the concentric management information area of the information storage medium with a light beam, and a playback unit configured to play back the management information from the management information area on the basis of the light beam applied from the irradiation unit.

According to still another aspect of the present invention, there is provided a management information playback method comprising irradiating the concentric management information area of the information storage medium with a light beam, and playing back the management information from the management information area on the basis of the applied light beam.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a burst cutting area (BCA) structure on an optical disc (WORM optical disc) as an example of an information storage medium of the present invention;
FIG. 2 is a view showing an example of the flow of a method of manufacturing this optical disc;
FIG. 3 is a view showing for explaining the movement of a beam spot in the BCA;
FIG. 4 is a graph for explaining a playback signal directly obtained from the BCA;
FIG. 5 is a block diagram showing a schematic arrangement of an optical disc apparatus which plays back a BCA pattern (management information) recorded in the BCA of an optical disc OD;
FIG. 6 is a flowchart for explaining a playback method for playing back the BCA pattern (management information) recorded in the BCA of the optical disc OD; and
FIG. 7 is a graph for explaining a playback signal which is obtained from the BCA and has undergone filter processing.

An embodiment of the present invention will be described below with reference to the accompanying drawing.

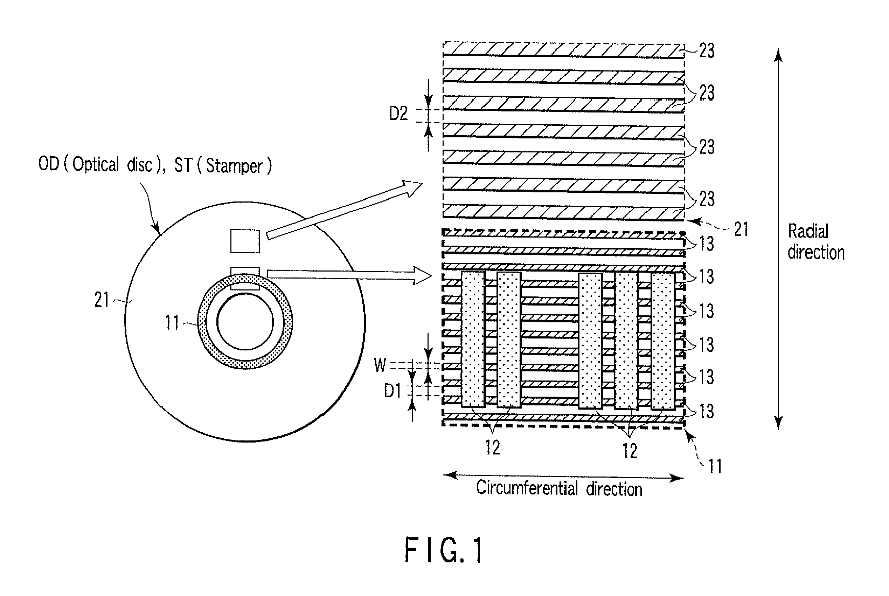

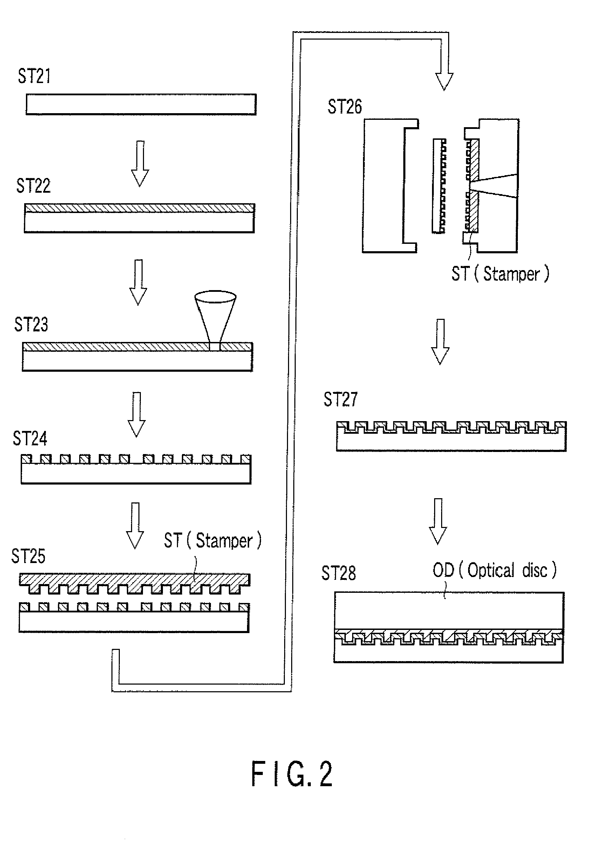

FIG. 1 is a view showing a burst cutting area (BCA) structure on an optical disc (WORM optical disc) as an example of an information storage medium of the present invention. FIG. 2 is a view showing the flow of a method of manufacturing this optical disc. From another viewpoint, FIG. 1 is a view showing the arrangement of the BCA in a stamper according to the embodiment of the present invention. Note that the stamper is a tool for forming the optical disc by press-molding.

When an optical disc OD is to be manufactured, disc unique information or management information is recorded on the disc. The disc unique information is, e.g., copy protection information. For example, the copy protection information is used to identify each disc.

On the optical disc such as a CD, DVD, BD, or HD-DVD, the disc unique information or the management information is recorded in advance as a barcode pattern in the BCA in the inner peripheral portion of the disc. In order to form on the disc the BCA in which the barcode pattern is recorded, the barcode pattern to be recorded in the BCA may be recorded on a stamper serving as a mold tool when the optical disc is to be manufactured. To record unique information on each disc, it is also possible to record a barcode pattern in the BCA of the manufactured disc by a laser. In a read-only disc, a barcode pattern is recorded by burning off a reflecting film of aluminum or the like by a laser beam. On the other hand, in a phase-change recording type disc, a barcode pattern is recorded by changing the reflectance by changing the phase of a phase-change recording film by a laser.

Unfortunately, a WORM optical disc using an organic dye material has the problem that no BCA pattern can be appropriately recorded even by emitting a laser beam by using a BCA recording apparatus. One reason is that the dependence of the dye material on the wavelength is high. The BCA recording apparatus records a BCA pattern on an optical disc by using a laser beam having a current-generation wavelength (e.g., 650 nm). However, no BCA pattern can be appropriately formed even when a laser beam having the current-generation wavelength (e.g., 650 nm) is applied to an optical disc corresponding to a next-generation short wavelength (e.g., 405 nm). Also, the WORM optical disc uses a silver (Ag)-based material having a high thermal conduction as a reflecting film. The power density of a laser spot output from the BCA recording apparatus is low, so the heat quantity is insufficient. Accordingly, this BCA recording apparatus cannot appropriately record any BCA pattern on the WORM optical disc because the sensitivity is insufficient.

In the present invention, therefore, the WORM optical disc (optical disc corresponding to a wavelength of 405 nm) is formed by using the following organic dye material as a recording layer. Spiral or concentric grooves are formed in advance in a BCA corresponding portion on the molded substrate of the optical disc, and the spiral or concentric grooves are also formed in a data region corresponding portion. Hence, as shown in FIG. 1, spiral or concentric grooves 13 are formed in a concentric BCA 11 (first stamp area) on a stamper ST, and spiral or concentric grooves 23 are also formed in a concentric data region 21 (second stamp area) on the stamper ST. That is, the spiral or concentric grooves 13 are formed in the concentric BCA 11 on an optical disc OD, and the spiral or concentric grooves 23 are also formed in the concentric data area 21 on the optical disc OD.

A dye can be applied to the grooves 13 and 23 aligned on the disc. A BCA pattern (bar-like pattern) 12 can be appropriately recorded on the BCA 11 by chemically changing the dye in the grooves 13 of the BCA 11 using a laser (laser having a wavelength of 650 nm) from a BCA recording apparatus. Note that the BCA patterns 12 are formed in a radial direction crossing the plurality of grooves 13. Disc unique information or management information is arranged using the plurality of BCA patterns 12 aligned in a circumferential direction. As described above, even if the optical disc is compatible with a wavelength of 405 nm, the essential dye sensitivity to the laser having a wavelength of 650 nm from the BCA recording apparatus can increase in the optical disc arrangement to which the dye can be applied.

Note that the BCA pattern 12 is a barcode pattern having a width (in the tangent direction) of a few ten µm and a length (in the radial direction) of about a few hundred µm. The distance (pitch) between the grooves 13 which are formed in the BCA 11 and adjacent to each other in the radial direction is several µm or less. More specifically, a distance D1 between the grooves 13 adjacent to each other in the radial direction in the BCA 11 and a distance D2 between the grooves 23 adjacent to each other in the radial direction in the data area 21 satisfy D1 ≦ D2. A distance D between the grooves 13 adjacent to each other in the radial direction in the BCA 11 and a width W of the groove 13 in the BCA 11 satisfy D/2 < W.

In this embodiment, the optical disc OD is a WORM optical disc having a diameter of 120 mn and a thickness of 1.2 mm (two 0.6-mm thick polycarbonate molded substrates are adhered), and using the organic dye material as the recording layer 1, and the BCA 11 has a donut-like shape having a radius of 22.3 to 23.1 mm. Recording and playback of the optical disc OD are performed by using a wavelength of 405 nm as recording/playback light and an optical system having an NA of 0.65. Also, the distance (track pitch) between grooves 23 formed in the data area 21 and adjacent to each other in the radial direction is 400 nm. Note that the present invention is not limited to these specifications.

The materials of the optical disc are as follows. The molded substrates are made of polycarbonate, the stamper for use in molding is made of nickel (Ni), the recording layer is made of an organic dye material, i.e., an azo-, diazo-, cyanine-, phthalocyanine-, or styryl-based dye or a mixture of these dyes, the reflecting film is made of silver (Ag), aluminum (Al), gold (Au), or a metal compound based on any of these metals, and the adhesive is made of an acryl- or epoxy-based ultraviolet-curing resin. However, the present invention is not limited to these materials.

A method of manufacturing the optical disc OD will be explained below with reference to FIG. 2. A master is made of glass having a surface which is polished and cleaned (ST21). A photoresist is applied to the surface of the master (ST22), and the photoresist surface is exposed to a laser beam or the like to record information (ST23). Then, the exposed master is developed to form convex and concave portions such as pits or grooves (ST24). After that, the master is plated to form a stamper ST (ST25). The main material of the stamper ST is nickel. By using the stamper ST as a mold, the molded substrate made of a resin is formed by injection molding (ST26). Polycarbonate is used as the resin. An organic dye as a recording layer 1 is applied on the thus formed molded substrate by spin coating (ST27). A reflection layer is formed on the dye layer, and a substrate is adhered to form an optical disc (ST28). BCA patterns 12 unique to the disc are recorded in a BCA 11 of the adhered disc by a BCA recording apparatus.

Note that in a master exposure step (ST23), the grooves 13 are exposed in the BCA 11 having a radius of 22.3 to 23.1 mm on the optical disc. Therefore, the grooves 13 are formed in a molded substrate molded in a molding step (ST26). Note that in this master exposure step (ST23), the grooves 23 are also exposed in the data area 21. Therefore, the grooves 23 are also formed on the molded substrate molded in the molding step (ST26). In a dye application step (ST27), the dye can be applied to the grooves 13 (and the dye can be applied to the grooves 23) to increase the essential dye sensitivity in the last BCA recording step.

When the groove 13 in the BCA 11 and the groove 23 in the data area 21 have completely different widths, the groove 13 in the BCA 11 and the groove 23 in the data region 21 cannot be formed by the same process in the same exposure device in the master exposure step. From the viewpoint of disc production efficiency, the distance (track pitch) D1 between the grooves 13 adjacent to each other in the radial direction in the BCA 11 may be almost equal to the distance (track pitch) D2 between the grooves 23 adjacent to each other in the radial direction in the data area 21. That is, D1 = D2 (or D1 ≒ D2) may be satisfied. For example, the above-described track pitch is 400 nm.

Alternatively, the distance (track pitch) D1 between the grooves 13 adjacent to each other in the radial direction in the BCA 11 may be 1.05 to 0.50 times the distance (track pitch) D2 between the grooves 23 in the data area 21. That is, D2 × 0.50 ≦ D1 ≦ D2 × 1.05 may be satisfied. However, if the track pitches in both the areas are completely the same, a track cross signal can become an obstacle, and the playback precision of the BCA signal can become poor when an optical drive plays back the BCA signal. To cope with this, the distance (track pitch) D1 between the grooves 13 adjacent to each other in the radial direction in the BCA 11 may be slightly smaller than the distance (track pitch) D2 between the grooves 23 adjacent to each other in the radial direction in the data area 21 to make it difficult to read the track cross signal by the head of the optical drive. That is, D1 < D2 may be satisfied.

Furthermore, in order to avoid the track cross signal from becoming an obstacle when the BCA signal is to be read, the width W of the groove 13 in the BCA 11 may be wider than half of the distance (track pitch) D between the grooves 13 adjacent to each other in the radial direction to make it difficult to output the track cross signal while the dye is efficiently applied in the grooves 13. That is, D/2 < W may be satisfied. More preferably, the width W of the groove 13 in the BCA 11 may be 0.6 to 0.8 times the distance (track pitch) D between the grooves 13 adjacent to each other in the radial direction. That is, D × 0.6 < W < D × 0.8 may be satisfied.

As the WORM optical disc, a High-to-Low medium in which the reflection of the recorded mark becomes lower than that of an unrecorded portion, and a Low-to-High medium in which the reflection of the recorded mark becomes higher than that of the unrecorded portion are available (e.g., using the dye disclosed in Jpn. Pat. Appln. KOKAI Publication Nos. 2002-74740 and 2002-206061). The present invention can be applied to both the media. Furthermore, as shown in FIG. 1, the present invention can be applied to both the media not only when the BCA pattern 12 is recorded in the BCA 11, but also when the BCA pattern 12 is formed by the "unrecorded" portion as in an outline character.

As described above, since the grooves 13 are formed in advance in the BCA 11 of the optical disc OD, and the dye material is applied to the grooves 13, the effective dye sensitivity can increase. Also, as described above, since the track pitch and width of the groove 13 are defined, the groove 13 is avoided from becoming the obstacle when the BCA signal is to be played back while the dye sensitivity increases.

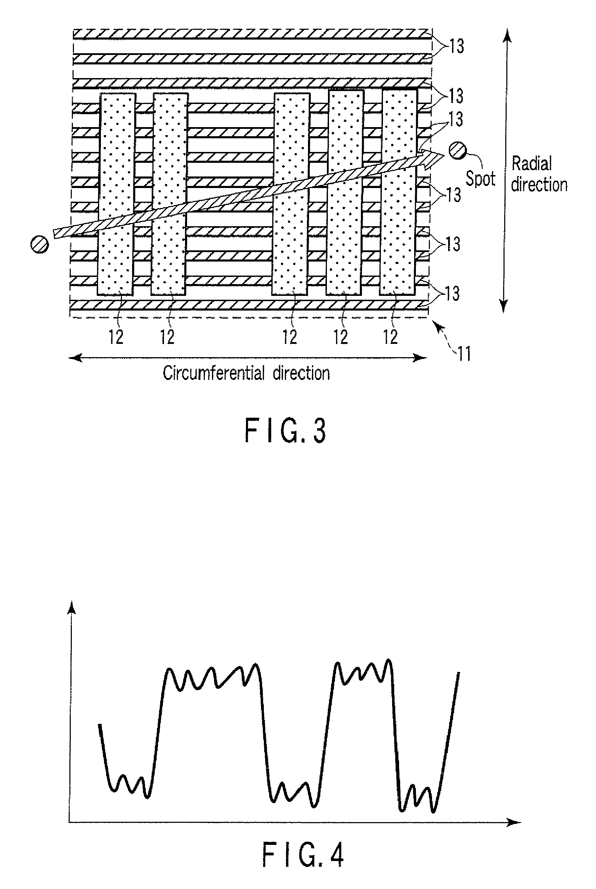

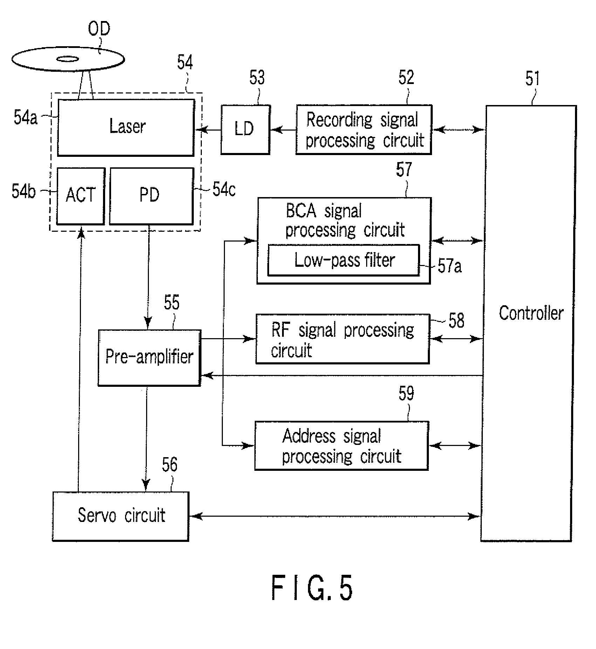

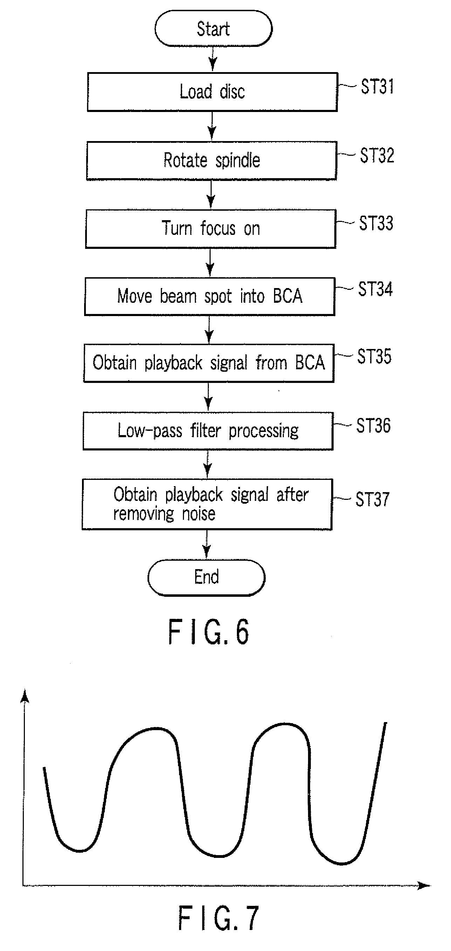

With reference to FIGS. 3 to 7, playback of the BCA pattern (management information) recorded in the BCA of the optical disc OD will be described below. FIG. 3 is a view showing for explaining the movement of a beam spot in the BCA. FIG. 4 is a graph for explaining a playback signal directly obtained from the BCA. FIG. 5 is a block diagram showing a schematic arrangement of the optical disc apparatus which plays back the BCA pattern (management information) recorded in the BCA of the optical disc OD. FIG. 6 is a flowchart for explaining a playback method for playing back the BCA pattern (management information) recorded in the BCA of the optical disc OD. FIG. 7 is a graph for explaining a playback signal which is obtained from the BCA and has undergone filter processing.

As shown in FIG. 5 the optical disc apparatus includes a controller 51, recording signal processing circuit 52, laser driver (LD) 53, optical pick up head (PUH) 54, pre-amplifier 55, servo circuit 56, BCA signal processing circuit 57, RF signal processing circuit 58, and address signal processing circuit 59. The optical pick up head 54 also includes a laser 54a, actuator (ACT) 54b, and photodetector (PD) 54c.

When the information is to be recorded, the controller 51 outputs a recording signal. The recording signal processing circuit 52 modulates this recording signal. On the basis of the modulated recording signal, the laser driver (LD) 53 drives the laser 54a. Then, the laser 54a irradiates the optical disc with the laser beam corresponding to the recording signal. With this operation, the information is recorded on the optical disc OD.

When the information is to be played back, the laser driver (LD) 53 drives the laser 54a on the basis of the playback signal. Hence, the laser 54a irradiates the optical disc with a playback laser beam. By this irradiation, the reflected light from the optical disc OD is detected by the photodetector 54c. The photodetector 54c outputs a reflected light component as an electrical signal. Note that the photodetector 54c includes a plurality of light detection elements (e.g., four light detection elements). A signal obtained by adding the signal components detected by the respective light detection elements is called a sum signal, and a signal obtained by subtracting the signal components detected by some light detection elements from those detected by the remaining light detection elements is called a difference signal. The pre-amplifier 55 amplifies the electrical signal output from the photodetector 54c.

The servo circuit 56 generates a servo signal on the basis of a servo control signal from the controller 51 and the electrical signal which is detected by the photodetector 54c and amplified by the pre-amplifier. The actuator (ACT) 54b controls focus, tracking, and tilt on the basis of the servo signal.

The BCA signal processing circuit 57 processes the electrical signal (sum signal) which is detected by the photodetector 54c and amplified by the pre-amplifier, to play back the BCA pattern. The BCA signal processing circuit 57 includes the low-pass filter 57a to remove high-frequency component noise. The RF signal processing circuit 58 processes the electrical signal (sum signal) which is detected by the photodetector 54c and amplified by the pre-amplifier, to play back contents information. The address signal processing circuit 59 processes the electrical signal (sum signal) which is detected by the photodetector 54c and amplified by the pre-amplifier, to play back physical address information.

As shown in FIG. 3, when the BCA signal is played back, tracking control of a playback-light beam spot is not performed. Accordingly, the playback-light beam spot sometimes obliquely passes through the bar-like BCA pattern 12 in the BCA 11. With this operation, as shown in FIG. 4, in addition to the signal component of the BCA pattern 12, the playback signal directly obtained from the BCA includes a small signal as noise from the groove 13. The low-pass filter 57a of the BCA signal processing circuit 57 shown in FIG. 5 removes this noise.

With reference to FIG. 6, playback of the BCA pattern 12 will be summarized. First, the optical disc OD is mounted (ST31), the spindle motor 37 is rotated (ST32), the focus is set on (ST33), and the beam spot moves to the BCA (ST34). That is, the light beam irradiates the BCA 11. Hence, the playback signal (reflected light) is obtained from the BCA (ST35), and the playback signal undergoes the low-pass filter process (ST36), and the playback signal without high-frequency component noise shown in FIG. 7 can be obtained (ST37). Since this high-frequency component noise is removed, the BCA can be correctly played back.

## Claims

1. A disc-like information storage medium **characterized by** comprising:
a concentric management information area (11); and
a concentric data area (21),
wherein the management information area includes
a plurality of grooves (13) aligned in a radial direction,
a dye material applied to said plurality of grooves, and
a plurality of bar-like patterns (12) formed in a radial direction crossing said plurality of grooves and aligned in a circumferential direction;
the data area includes
a plurality of grooves (23) aligned in the radial direction, and
a dye material applied to said plurality of grooves; and
said plurality of bar-like patterns aligned in the circumferential direction includes management information.

2. A medium of claim 1, **characterized in that** a distance D1 between the grooves adjacent to each other in the radial direction in the management information area and a distance D2 between the grooves adjacent to each other in the radial direction in the data area satisfy D1 ≦ D2.

3. A medium of claim 1, **characterized in that** a distance D1 between the grooves adjacent to each other in the radial direction in the management information area and a distance D2 between the grooves adjacent to each other in the radial direction in the data area satisfy D2 × 0.50 ≦ D1 ≦ D2 × 1.05.

4. A medium of claim 1, **characterized in that** a distance D between the grooves adjacent to each other in the radial direction in the management information area and a width W of the groove in the management information area satisfy D/2 < W.

5. A medium of claim 1, **characterized in that** a distance D between the grooves adjacent to each other in the radial direction in the management information area and a width W of the groove in the management information area satisfy D × 0.6 < W < D × 0.8.

6. A stamper for forming a disc-like information storage medium by press-molding, **characterized by** comprising:
a first stamp area (11) in which a concentric management information area is formed by press-molding; and
a second stamp area (21) in which a concentric data area is formed by press-molding,
wherein the first stamp area has a plurality of grooves (13) aligned in a radial direction, and
the second stamp area has a plurality of grooves (23) aligned in the radial direction.

7. A stamper of claim 6, **characterized in that** a distance D1 between the grooves adjacent to each other in the radial direction in the first stamp area and a distance D2 between the grooves adjacent to each other in the radial direction in the second stamp area satisfy D1 ≦ D2.

8. A stamper of claim 6, **characterized in that** a distance D1 between the grooves adjacent to each other in the radial direction in the first stamp area and a distance D2 between the grooves adjacent to each other in the radial direction in the second stamp area satisfy D2 × 0.50 ≦ D1 ≦ D2 × 1.05.

9. A stamper of claim 6, **characterized in that** a distance D between the grooves adjacent to each other in the radial direction in the first stamp area and a width W of the groove in the first stamp area satisfy D/2 < W.

10. A stamper of claim 6, **characterized in that** a distance D between the grooves adjacent to each other in the radial direction in the first stamp area and a width W of the groove in the first stamp area satisfy D × 0.6 < W < D × 0.8.

11. A disc apparatus for playing back management information from a disc-like information storage medium having a concentric management information area and a concentric data area, the management information area including a plurality of grooves aligned in a radial direction, a dye material applied to said plurality of grooves, and a plurality of bar-like patterns formed in a radial direction crossing said plurality of grooves and aligned in a circumferential direction; the data area including a plurality of grooves aligned in the radial direction, and a dye material applied to said plurality of grooves; and said plurality of bar-like patterns aligned in the circumferential direction including management information, **characterized by** comprising:
an irradiation unit (54) configured to irradiate the management information area with a light beam; and
a playback unit (58) configured to play back the management information on the basis of the light beam applied from the irradiation unit.

12. A management information playback method for playing back management information from a disc-like information storage medium having a concentric management information area and a concentric data area, the management information area including a plurality of grooves aligned in a radial direction, a dye material applied to said plurality of grooves, and a plurality of bar-like patterns formed in a radial direction crossing said plurality of grooves and aligned in a circumferential direction; the data area including a plurality of grooves aligned in the radial direction, and a dye material applied to said plurality of grooves; and said plurality of bar-like patterns aligned in the circumferential direction including management information, **characterized by** comprising:
irradiating the management information area with a light beam (ST33, ST34);
detecting reflected light of the applied light beam (ST35); and
playing back the management information on the basis of a detected detection signal (ST36, ST37).
